# EUROPÄISCHE PATENTANMELDUNG

(11) **EP 1 688 728 A1**
(43) Veröffentlichungstag der Anmeldung: **09.08.2006**
(21) Anmeldenummer: 06000789.5
(22) Anmeldetag: 14.01.2006
(51) Int. Cl.: G01L 1/22, G01L 5/00, G01L 5/13, A01B 63/112

(54) **Bolzenförmige Kraftmesseinrichtung**

(30) Priorität: 28.01.2005 DE 102005004060
(71) Anmelder: Bosch Rexroth Aktiengesellschaft, 70184 Stuttgart (DE)
(72) Erfinder: Thierbach, Peter, 71634 Ludwigsburg (DE)

(57) **Zusammenfassung**

Eine bolzenförmige Kraftmesseinrichtung weist eine biegesteife Hülse und einen einseitig in die Hülse eingespannten elastischen Messstab auf. Die zu messenden Kraft greift an dem Messstab an. Der Kraftfluss verläuft von dem Messstab weiter über die Einspannstelle in die Hülse, wobei sich der Messstab entsprechend der Kraft gegenüber der Hülse durchbiegt. Die Kraftmesseinrichtung besitzt einen Messwertaufnehmer, der die kraftabhängige Durchbiegung des Messstabs in eine dieser entsprechende elektrische Größe umformt und einen mechanischen Anschlag, der die Durchbiegung des Messstabs begrenzt.

## Beschreibung

Die Erfindung betrifft eine bolzenförmige Kraftmesseinrichtung mit einer Hülse und mit einem einseitig in der Hülse eingespannten Messstab, die eine Kraft, mit der die Messeinrichtung beaufschlagt ist, in eine der Kraft entsprechende elektrische Größe umformt.

Eine derartige Kraftmesseinrichtung ist als bolzenförmiges Verbindungsteil ausgebildet, das z. B. ein Arbeitsgerät mit einem landwirtschaftlichen Schlepper verbindet und dabei die Kraft misst, die das Arbeitsgerät auf den Schlepper ausübt. Derartige Kraftmesseinrichtungen werden auch als Kraftmessbolzen bezeichnet.

Aus der DE 35 15 125 A1 ist eine derartige bolzenförmige Kraftmesseinrichtung bekannt. In der Bohrung einer biegeelastischen Hülse ist ein biegesteifer Messstab einseitig gehalten. Der Messstab ist dabei so angeordnet, dass sein freies Ende sich im unbelasteten Zustand der Kraftmesseinrichtung in der Längsachse der Hülse erstreckt. Die zu messende Kraft verläuft über die Hülse und biegt die Hülse entsprechend der Größe dieser Kraft mehr oder weniger stark durch. Im Gegensatz hierzu erfolgt keine Durchbiegung des Messstabs. Die Durchbiegung der Hülse führt zu einer Auslenkung des freien Endes des Messstabs gegenüber der Hülse. Die Auslenkung des Messstabs gegenüber der Hülse ist somit ein Maß für die Größe der auf die Kraftmesseinrichtung wirkenden Kraft. Ein Wegaufnehmer formt die Auslenkung des freien Endes des Messstabs gegenüber der Hülse in eine der Auslenkung entsprechende elektrische Größe um. Die elektrische Größe ist somit auch ein Maß für die auf die Kraftmesseinrichtung wirkende Kraft. Wird die zu übertragende Kraft zu groß, kommt das freie Ende des Messstabs mit der Innenfläche der Hülse in Berührung. Der Messbereich der Kraftmesseinrichtung muss deshalb so gewählt werden, dass er kleiner als dieser Grenzwert ist. Beim Auftreten einer diesen Grenzwert übersteigenden Kraft, die zu einer Berührung der Innenfläche der Hülse durch den Messstab führt, besteht die Gefahr einer Beschädigung des Messstabs oder des Wegaufnehmers.

Sorgt man, z. B. durch einen großen Materialquerschnitt der Hülse dafür, dass die maximale Kraft, die ohne eine Beschädigung des Messstabs oder des Messaufnehmers übertragen werden kann, groß ist, so ist die Signalausbeute der Kraftmesseinrichtung bei kleinen Kräften nicht mehr groß genug, d. h. die Messempfindlichkeit verschlechtert sich durch diese Maßnahme. Durch eine Verringerung des Materialquerschnitts der Hülse lässt sich zwar eine bessere Messempfindlichkeit erreichen, jedoch vergrößert diese Maßnahme die Gefahr einer mechanischen Überlastung der Kraftmesseinrichtung bei der Übertragung von großen Kräften. Dazu kommt, däss beim Betrieb einer landwirtschaftlichen Arbeitsmaschine der nicht zu vermeidende Verschleiß im Laufe der Zeit zu einer Vergrößerung des Durchmessers der die Hülse aufnehmenden Bohrungen gegenüber den Werten im Neuzustand führt. Wird die Hülse mit einer bestimmten Kraft beaufschlagt, führt eine Vergrößerung des Durchmessers der die Hülse aufnehmenden Bohrungen zu' einer größeren Durchbiegung der Hülse als im Neuzustand. Die vergrößerte Durchbiegung der Hülse ergibt eine vergrößerte Auslenkung des Messstabs bezüglich der Hülse und damit ein entsprechend vergrößertes elektrisches Signal gegenüber dem Neuzustand, wenn dieselbe Kraft auf die Hülse wirkt.

Der Erfindung liegt die Aufgabe zugrunde, eine Kraftmesseinrichtung der eingangs genannten Art zu schaffen, die insbesondere eine Übertragung von Kräften erlaubt, die deutlich größer als der maximale Messbereich der Kraftmesseinrichtung sind, ohne dass eine mechanische Beschädigung der Kraftmesseinrichtung erfolgt.

Diese Aufgabe wird durch eine Kraftmesseinrichtung mit den Merkmalen des Patentanspruchs 1 gelöst.

Durch die Erfindung lassen sich Messbereich und Überlastfestigkeit getrennt voneinander dimensionieren. Damit ist es einerseits möglich, die Hülse so auszulegen, dass die im Betrieb maximal auftretenden Kräfte übertragen werden, ohne dass - insbesondere bei stoßförmiger Belastung - die Kraftmesseinrichtung mechanisch beschädigt wird, und dass andererseits trotzdem Kraftmessbereiche realisiert werden können, die kleiner als die maximal im Betrieb auftretenden Kräfte sind. Somit ist es möglich, unabhängig von der Höhe der maximal auftretenden Kräfte die gewünschte Messempfindlichkeit der Kraftmesseinrichtung frei festzulegen.

Eine verschleißbedingte Vergrößerung der die Hülse aufnehmenden Lagerbohrungen vergrößert zwar das Spiel zwischen den durch die Hülse verbundenen Teilen, beeinflusst aber nicht die Größe der Durchbiegung des innerhalb der Hülse angeordneten Messstabs bei gleichen Kräften und wirkt sich daher auch nicht auf die Größe des elektrischen Ausgangssignals bei gleichen Kräften aus.

Vorteilhafte Weiterbildungen der Erfindung sind in den Unteransprüchen gekennzeichnet. Die Unteransprüche betreffen konstruktive Ausgestaltungen der Kraftmessanordnung, insbesondere hinsichtlich der eingesetzten Messwertaufnehmer, sowie Ausgestaltungen der Kraftmessanordnung, die eine getrennte Erfassung von in verschiedenen Richtungen wirkenden Kräften erlaubt.

Die Erfindung wird im Folgenden mit ihren weiteren Einzelheiten anhand von in den Zeichnungen dargestellten Ausführungsbeispielen näher erläutert. Es zeigen
- Figur 1: einen Schnitt durch eine erste Kraftmesseinrichtung im unbelasteten Zustand,
- Figur 2: einen Schnitt entlang der Linie A-A aus Figur 1,
- Figur 3: einen Schnitt durch die in der Figur 1 dargestellte Kraftmesseinrichtung bei Belastung mit einer den Maximalwert des Messbereichs übersteigenden Kraft,
- Figur 4: einen Schnitt durch eine zweite Kraftmesseinrichtung im unbelasteten Zustand und
- Figur 5: einen Schnitt durch die in der Figur 4 dargestellte Kraftmesseinrichtung bei Belastung mit einer den Maximalwert des Messbereichs übersteigenden Kraft.

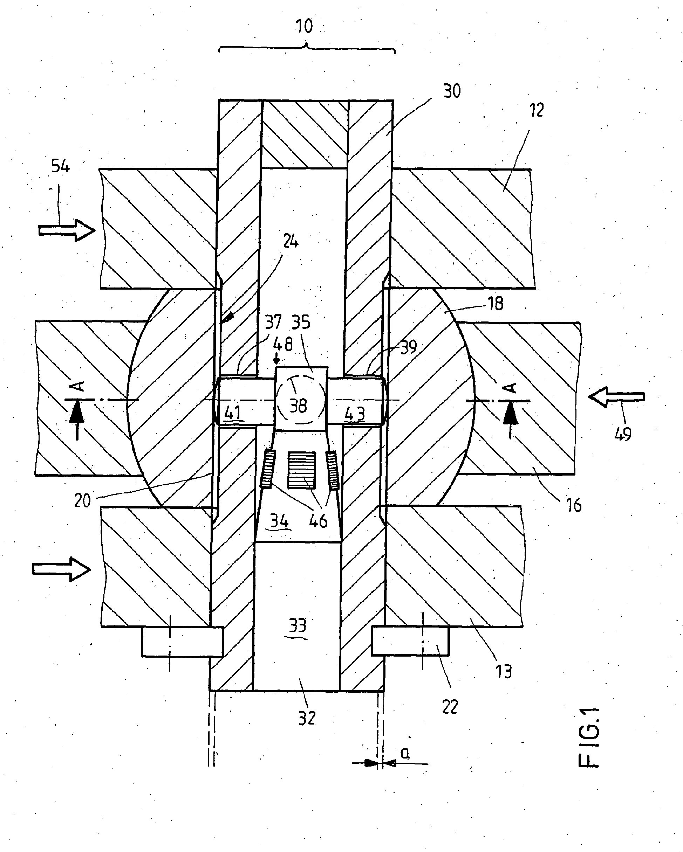

In der Figur 1 ist ein Kraftmessbolzen als eine erste beispielhafte Ausführungsform der erfindungsgemäßen Kraftmesseinrichtung dargestellt. Der Kraftmessbolzen 10 stellt eine Verbindung zwischen zwei Schenkeln 12, 13 eines nicht näher dargestellten mehrteiligen Schleppergehäuses und einem Lenker. 16 her. Die Gehäuseschenkel 12, 13 sind mit Lagerbohrungen versehen, die den Kraftmessbolzen 10 aufnehmen. Eine Lagerschale 18, die am Lenker 16 angebracht ist, ist als Kugelbuchse ausgebildet. Sie weist eine Bohrung 20 zur Aufnahme des Kraftmessbolzens 10 auf und ist zwischen den Gehäuseschenkeln 12, 13 ange-ordnet. Die Bohrungen in den Gehäuseschenkeln 12, 13 und der Lagerschale 18 haben den gleichen Durchmesser. Der Kraftmessbolzen 10 ist in die Bohrungen der Gehäuseschenkel 12, 13 und der Lagerschale 18 eingesetzt. Ein plattenförmiges Halteelement 22 fixiert den Kraftmessbolzen 10 in Richtung seiner Längsachse und hinsichtlich seiner Drehlage gegenüber den Gehäuseschenkeln 12, 13.

Der Kraftmessbolzen 10 besitzt eine äußere, biegesteife Hülse 30. Innerhalb der Hülse 30 ist ein Messstab 32 befestigt. Der Messstab 32 weist einen unteren Abschnitt 33 mit kreisförmigen Querschnitt auf. Ein mittlerer Abschnitt 34 des Messstabs 32 verjüngt sich ausgehend von der Querschnittsfläche des unteren Abschnitts konisch. Auf dem konischen Abschnitt 34 des Messstabs 32 sind Dehnungsmessstreifen 46 angeordnet, um eine Verformung des Messstabs 32 zu erfassen. An den mittleren Abschnitt 34 setzt ein quaderförmiger oberer Abschnitt 35 mit quadratischer Radialquerschnittsfläche an. Der Messstab 32 ist in der Hülse 30 einseitig befestigt. Dazu ist der untere Abschnitt 33 des Messstabs 32 in die Hülse 30 eingepresst.

Im Bereich der Lagerschale 18 ist die Hülse 30 senkrecht zur Hülsenlängsachse mit vier Bohrungen 37, 38, 39, 40 versehen. Benachbarte Bohrungen 37, 38, etc. schließen gegeneinander jeweils einen Winkel von 90° ein. Die Bohrungen 37 bis 40 sind jeweils auf der gleichen Höhe hinsichtlich der Hülsenlängsachse angeordnet. Die Bohrungen sind hinsichtlich der Lagerschale 18 in Axialrichtung etwa mittig vorgesehen.

Im Bereich der Lagerschale 18 besitzt die Hülse 30 zudem einen geringeren Außendurchmesser als im Bereich der Gehäuseschenkel 12, 13, so dass die Lagerschale 18 unter Einwirkung einer Kraft 49 gegenüber der Hülse 30 aus ihrer zentrierten Lage radial verschiebbar ist. Die Hülsenumfangsfläche bildet im Bereich der Lagerschale 18 eine Anschlagsfläche 24, die die maximale Auslenkung begrenzt. Die maximale Auslenkung a entspricht dem Unterschied zwischen dem' Außenradius der Hülse 30 an der Anschlagsfläche 24 und dem Innenradius der Lagerschalenbohrung 20.

Die Verschiebung der Lagerschale 18 wird durch Stößel 41, 42, 43, 44 auf den Messstab 32 übertragen. Die Stößel 41 bis 44 sind in den Bohrungen 37 bis 40 jeweils radial verschiebbar gelagert. Im unbelasteten Zustand des Kraftmessbolzens 10 stehen die Stößel 41 bis 44 aus der Anschlagsfläche 24 vor und liegen mit ihrem außenseitigen, kuppenförmigen Ende an der Innenumfangsfläche der Lagerschalenbohrung 20 an. Das innenseitige Ende der Stößel 41 bis 44 liegt am oberen Abschnitt 35 des Messstabs 32 an. Der obere Abschnitt 35 ist so ausgerichtet, dass die Stößel 41 bis 44 jeweils an einer senkrecht zu ihrer Bewegungsrichtung orientierten Fläche des Abschnitts 35 zur Anlage kommen. Dadurch treten am Messstab keine Torsionskräfte sondern nur Biegekräfte entlang der zwei senkrecht aufeinanderstehenden Bewegungsachsen der Stößel 41 bis 44 auf.

Die Summe der Längen gegenüberliegender Stößel 41, 43 und der Kantenlänge des oberen Abschnitts 35 in Radialrichtung entspricht im Wesentlichen dem Innendurchmesser der Lagerschalenbohrung 20, so dass die Lagerschale 20 durch die Stößel 41 bis 44 mit möglichst geringen Spiel geführt ist. Die Stößel 41 bis 44 stehen im unbelasteten Zustand des Kraftmessbolzens 10 jeweils um eine Länge aus der Anschlagsfläche 24 vor, die der maximalen Auslenkung der Lagerschale 18 entspricht.

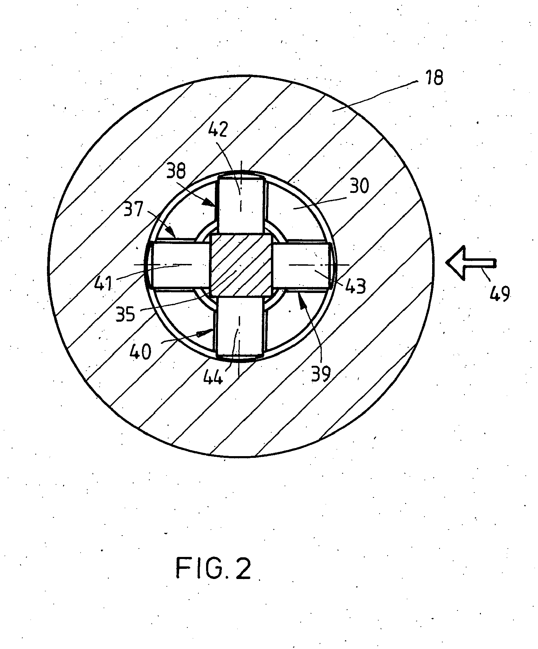

Figur 2 zeigt einen Schnitt durch die Lagerschale 18 und den Kraftmessbolzen 10 entlang der in Figur 1 gezeigten Achse A-A. Zu erkennen sind die Lagerschale 18, die Hülse 30, die Bohrungen 37 bis'40 sowie die darin verschiebbaren.Stößel 41 bis 44. Ebenso ist der quadratische Querschnitt des oberen Abschnitts 35 ersichtlich.

Anhand Fig. 1 und 2 sowie der Figur 3, die den Kraftmessbolzen 10 unter Einwirkung einer den Messbereich übersteigenden Kraft zeigt, wird im Folgenden die Funktionsweise der erfindungsgemäßen Kraftmesseinrichtung erläutert.

Die Figuren 1 und 2 zeigen den Kraftmessbolzen 10 unter Einwirkung einer geringen Kraft, die keine sichtbare Verformung des Messstabs 32 hervorruft. Die über den Lenker 16 einwirkende Kraft wird durch den Kraftpfeil 49 symbolisiert. Die an den Gehäuseschenkein 12, 13 aufgebrachte Gegenkraft ist jeweils durch Pfeile 54 dargestellt. Der Pfeil 48 markiert die Lage des Messstabs 32 in diesem schwach belasteten Zustand.

Die über den Lenker 16 einwirkende Kraft 49 wird über die Lagerschale 18 und den Stößel 43 auf den Messstab 32 übertragen. Der Kraftfluss verläuft vom oberen Abschnitt 35 weiter über den unteren Abschnitt 33 des Messstabs 32 in die Hülse 30 und wird von den Gehäuseschenkeln 12, 13 aufgenommen.

Die auf den Messstab 32 einwirkende Kraft bewirkt eine der Kraft entsprechende Durchbiegung des Messstabs 32. Die Hülse 30 ist biegesteif ausgeführt. Die Durchbiegung des Messstabs 32 wird von den Dehnungsmessstreifen 46 in ein elektrisches Signal umgewandelt. Die Dehnungsmessstreifen 46 sind an der gleichen Umfangsposition wie die Stößel 41 bis 44 angeordnet. Das Signal eines Dehnungsmessstreifens 46 ist somit jeweils im Wesentlichen der Krafteinwirkung über einen der Stößel 41 bis 44 zugeordnet. Durch die Anordnung der Dehnungsmessstreifen 46 auf dem Messstab 32 hängt das Messergebnis nur von der Durchbiegung des Messstabs 32 ab. Eine bei großen Kräften eventuell auftretende Durchbiegung der Hülse 30 wird nicht erfasst.

Der Messstab 32 ist hinsichtlich seines Durchmessers und Materials so dimensioniert, dass die aufgenommene Kraft zu einer elastischen, reversiblen Durchbiegung führt. Mit zunehmender Stärke der einwirkenden Kraft 49 nimmt auch die Durchbiegung des Messstabs 32 und somit die Verschiebung der Lagerschale 18 gegenüber der Hülse 30 zu.

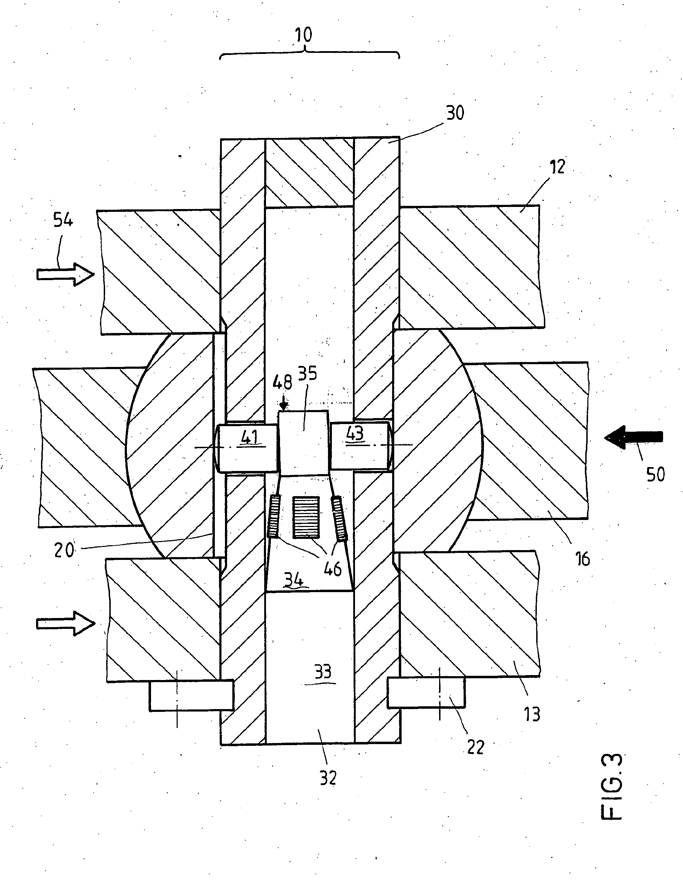

Wie aus Figur 3 ersichtlich, ist die maximale Verschiebedistanz a der Lagerschale 18 gegen die Hülse 30 begrenzt, da die Lagerschale 18 bei zunehmender Krafteinwirkung 50 gegen die Anschlagsfläche 24 der biegesteifen Hülse 30 zum Anschlag kommt. Die maximale Verschiebedistanz a und das Elastizitätsmodul des Messstabs 32 geben eine Kraft F1, die der Messstab 32 höchstens aufnimmt, vor. Die Kraft F1 ist somit auch die obere Grenze des Messbereichs des Kraftmessbolzens 10. Die darüber hinaus auf den Lenker 16 beaufschlagte Kraft wird direkt von der Lagerschale 18 auf die Hülse 30 geleitet.

Somit können der Messbereich des Kraftmessbolzens, insbesondere die obere Messbereichsgrenze F1, sowie die maximal zulässige Krafteinwirkung F2 auf den Kraftmessbolzens getrennt voneinander festgelegt werden. Die Kraft F2 ist dabei durch die Belastbarkeit der Hülse vorgegeben.

Der Kraftmessbolzen 10 ist für die in Landwirtschaftsmaschinen üblicherweise auftretenden Kraftbelästungen bis über 200 kN dimensionierbar. Der Messbereich lässt sich alleine durch die Dimensionierung des Messstabes 32 festlegen und erlaubt bei Verwendung einer niedrigen Materialstärke des Messstabes 32 eine sehr gute Auflösung und Signalausbeute bei geringen Kräften. Dazu wird z.B. eine Kraft von 25 kN als Höchstgrenze F1 für die vom Messstab 32 aufgenommene Kraft gewählt.

Der Kraftmessbolzen 10 erlaubt eine gleichzeitige Messung zweier senkrecht aufeinander stehender, entlang der Stößelbewegungsachsen einwirkenden Kräfte. Die Durchbiegung des Messstabs 32 entlang der zwei senkrecht aufein-anderstehenden Stößelbewegungsachsen wird durch die Dehnungsmessstreifen 46 getrennt voneinander ermittelt. Da die Durchbiegung des Messstabes 32 durch die Anschlagsfläche 24 zuverlässig auf geringe Werte begrenzt ist, typischer Weise einige 0,1 mm, tritt am Messstab 32 keine mechanische Wechselwirkung zwischen senkrecht zueinander einwirkenden Kräften auf. Zudem ist eine Beeinflussung eines Messwertaufnehmers - eines Dehnungsmessstreifens 46 - durch eine senkrecht zu seiner Messrichtung einwirkende Kraft gering.

Durch entsprechende Varianten der Querschnittsgestaltung des Messstabs 32, insbesondere durch Verwendung verschiedener Kantenlängen für den Querschnitt des oberen Abschnitts 35 und/oder einen ellipsenförmigen Querschnitt des konischen Abschnitts 34, können unterschiedliche Messkennlinien und Messbereiche für die verschiedenen Messrichtungen realisiert werden.

In dem gezeigten Beispiel wirkt die Kraft 49 , 50 entlang der Achse des Stößels 43. Eine Kraft aus anderer Richtung teilt sich gemäß der bekannten mechanischen Prinzipien anteilig auf zwei Stößel auf.

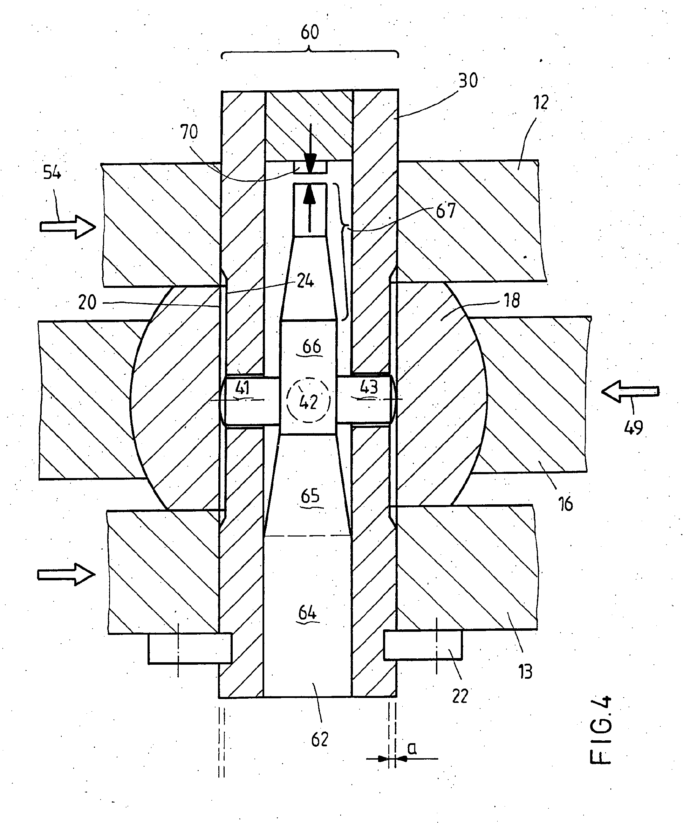

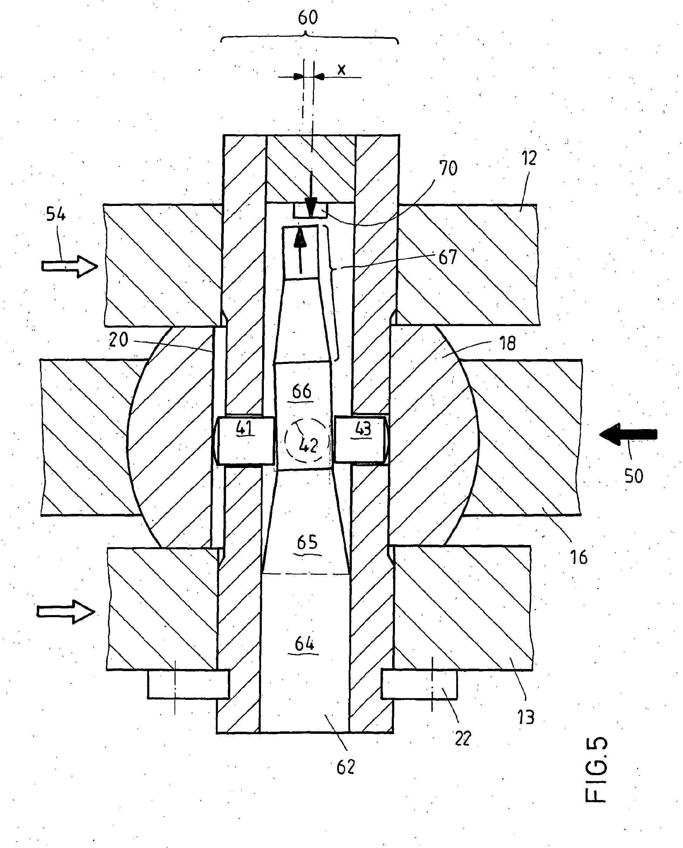

In den Figuren 4 und 5 ist eine weitere Ausführungsform eines erfindungsgemäßen Kraftmessbolzens 60 dargestellt. Der Aufbau des Kraftmessbolzens 60 entspricht im wesentlichen dem Kraftmessbolzen 10, der in Figur 1 bis 3 dargestellt ist. Der Unterschied zum Kraftmessbolzen 10 liegt in der Gestaltung des Messstabes 62 und der Signalerfassung. Hinsichtlich der übrigen Ausgestaltung wird auf die vorangehende Beschreibung des Kraftmessbolzens 10 verwiesen.

Der Messstab 62 des Kraftmessbolzens 60 ist an seinem unteren Abschnitt 64 in die Hülse 30 eingepresst, um den Messstab 62 einseitig in der Hülse 30 zu befestigen. Die Durchbiegung des Messstabes 62 wird von einem Wegaufnehmer 70 erfasst, der in der Hülse 30 stirnseitig gegenüber dem freien Ende des Messstabes 62 angeordnet ist.

An den kreiszylinderförmigen unteren Abschnitt 64 des Messstabes 62 schließt ein sich konisch verjüngender mittlerer Abschnitt 65 an. Auf den mittleren Abschnitt 65 ist ein quaderförmiger oberer Abschnitt 66, an dem die Stößel 41, 42, 43 anliegen, aufgesetzt. An dieser Stelle wird die vom Lenker 16 einwirkende Kraft auf den Messstab 62 übertragen. Dem oberen Abschnitt 66 folgt ein Kopfabschnitt 67, der das freie Ende des Messstabes 62 bildet. Der Wegaufnehmer 70 misst die Radialauslenkung des Kopfabschnitts 67 aus seiner Neutrallage. Der Wegaufnehmer 70 ist so beschaffen, dass er die Auslenkung des Messstabes 62 entlang zweier senkrecht aufeinander stehender Bewegungsachsen erfassen kann. Diese Achsen entsprechen den Achsen der Stößel 41 und 43 bzw. 42 und 44.

Der Wegaufnehmer 70 kann auf verschiedene Weise realisiert werden. Beispielsweise können auf der Stirnfläche des Kopfabschnitts 67 Magnete angeordnet sein. Im Wegaufnehmer 70 sind Hall-Sensoren den Magneten gegenüberliegend angebracht. Die Hall-Sensoren erfassen die Auslenkung der Magnete und setzen somit die Auslenkung des Kopfabschnitts 67 in ein elektrisches Signal um.

Für die Erfassung der Auslenkungen entlang der zwei Stößelbewegungsachsen sind je ein Magnet und ein Hall-Sensor für die jeweilige Auslenkungsrichtung vorgesehen. Ein erster Magnet ist mit seiner Nord-Süd Achse entlang der ersten Auslenkungsrichtung - entsprechend der Bewegungsrichtung der Stößel 41 und 43 - auf der Stirnfläche des Kopfabschnitts 67 angeordnet und hat entlang der Nord-Süd Achse eine Länge, die der maximalen Auslenkung des Kopfabschnitts in dieser Richtung entspricht. Die Breite des Magnets ist größer als seine Länge, um den Einfluss einer senkrecht zur ersten Auslenkungsrichtung erfolgenden Auslenkung zu minimieren. Der zweite Magnet ist zu dem ersten Magnet senkrecht ausgerichtet und räumlich getrennt von diesem auf der Stirnfläche des Kopfabschnitts 67 angeordnet.

In der gleichen Weise wie bei dem Kraftmessbolzen 10 ist auch beim Kraftmessbolzen 60 die maximale Verschiebedistanz a der Lagerschale 18 durch den Unterschied zwischen dem Außenradius der Hülse 30 im Bereich der Lagerschale 18 und dem Innenradius der Lagerschalenbohrung 20 festgelegt. Die Figur 5 zeigt den Kraftmessbolzen 60 unter Einfluss einer Kraft 50, die die Lagerschale 18 an der Hülse 30 zum Anschlag bringt. Aufgrund der geometrischen Abmessungen des Messstabes 62 ergibt sich eine Maximalauslenkung x des Kopfabschnitts 67. Der Wegaufnehmer 70 ist in seinem Messbereich so dimensioniert, so dass die Maximalauslenkung x noch erfasst wird.

Durch die Verwendung des Wegaufnehmers 70 wird die Durchbiegung des Messstabes 62 gegenüber der Hülse 30 erfasst. Um eine möglichst hohe Messgenauigkeit zu erzielen, ist die Hülse 30 biegesteif ausgeführt.

### Bezugszeichenliste

- 10: Kraftmessbolzen
- 12: Gehäuseschenkel
- 13: Gehäuseschenkel
- 16: Lenker
- 18: Lagerschale
- 20: Bohrung
- 22: Halteelement
- 24: Anschlagsfläche
- 30: Hülse
- 32: Messstab
- 33: unterer, eingepresster Abschnitt
- 34: mittlerer, konischer Abschnitt
- 35: oberer Abschnitt
- 37: Bohrung
- 38: Bohrung
- 39: Bohrung
- 40: Bohrung
- 41: Stößel
- 42: Stößel
- 43: Stößel
- 44: Stößel
- 46: Dehnungsmessstreifen
- 49: Kraftpfeil
- 50: Kraftpfeil
- 54: Gegenkraft
- 60: Kraftmessbolzen
- 62: Messstab
- 64: unterer, eingepresster Abschnitt
- 65: mittlerer, konischer Abschnitt
- 66: oberer Abschnitt
- 67: Kopfabschnitt
- 70: Wegaufnehmer

## Patentansprüche

1. Bolzenförmige Kraftmesseinrichtung mit einer biegesteifen Hülse (30) und mit einem einseitig in der Hülse (30) eingespannten elastischen Messstab (32; 62),
- bei der die zu messenden Kraft (49) an dem Messstab (32; 62) angreift und der Kraftfluss von dem Messstab (32; 62) weiter über die Einspannstelle (33; 64) in die Hülse (30) verläuft, wobei sich der Messstab (32; 62) entsprechend der Kraft (49) gegenüber der Hülse (30) durchbiegt,
- mit einem Messwertaufnehmer (46; 70), der die kraftabhängige Durchbiegung des Messstabs (32; 62) in eine dieser entsprechende elektrische Größe umformt, und
- mit einem mechanischen Anschlag (24), der die Durchbiegung des Messstabs (32; 62) begrenzt.

2. Kraftmesseinrichtung nach Anspruch 1, **dadurch gekennzeichnet, dass** an dem Messstab (32) mindestens ein Dehnungsmessstreifen (46) gehalten ist und dass das Ausgangssignal des Dehnungsmessstreifens (46) als Maß für die zu messende Kraft (49) dient.

3. Kraftmesseinrichtung nach Anspruch 1, **dadurch gekennzeichnet, dass** sich der Messstab (62) auf der der Einspannstelle (64) gegenüberliegenden Seite über die Angriffsstelle (66) der Kraft (49) hinaus erstreckt und dass ein Wegaufnehmer (70) die Auslenkung des freien Endes (67) des Messstabs (62) in eine der Auslenkung entsprechende elektrische Größe umformt.

4. Kraftmesseinrichtung nach einem der Ansprüche 1 bis 3, **dadurch gekennzeichnet, dass** ein Stößel (43), dessen Längsachse senkrecht zu der Längsachse der Hülse (30) verläuft, durch eine Ausnehmung (39) der Hülse (30) geführt ist und dass die Kraft (49) dem Messstab (32; 62) über den Stößel (43) zugeführt ist.

5. Kraftmesseinrichtung nach Anspruch 4, **dadurch gekennzeichnet, dass** auf der dem ersten Stößel (43) gegenüberliegenden Seite des Messstabs (32; 62) ein zweiter Stößel (41) durch eine zweite Ausnehmung (37) der Hülse (30) geführt ist.

6. Kraftmesseinrichtung nach Anspruch 5, **dadurch gekennzeichnet, dass** die beiden Stößel (41, 43) eine gemeinsame Längsachse besitzen.

7. Kraftmesseinrichtung nach Anspruch 5 oder Anspruch 6, **dadurch gekennzeichnet, dass** ein dritter senkrecht zu der Längsachse der Hülse (30) angeordneter Stößel (42) durch eine dritte Ausnehmung (38) der Hülse (30) geführt ist, wobei der dritte Stößel (42) um 90° gegenüber dem ersten Stößel (43) versetzt ist.

8. Kraftmesseinrichtung nach Anspruch 7, **dadurch gekennzeichnet, dass** auf der dem dritten Stößel (42) gegenüberliegenden Seite des Messstabs (32; 62) ein vierter Stößel (44) durch eine vierte Ausnehmung (40) der Hülse (30) geführt ist.

9. Kraftmesseinrichtung nach Anspruch 8, **dadurch gekennzeichnet, dass** der dritte und der vierte Stößel (42, 44) eine gemeinsame Längsachse besitzen.

10. Kraftmesseinrichtung nach einem der Ansprüche 4 bis 9, **dadurch gekennzeichnet, dass** die maximale Durchbiegung des Messstabs (32; 62) durch die Länge des im unbelasteten Zustand der Kraftmesseinrichtung über die Umfangsfläche (24) der Hülse (30) hinausragenden Teils des die Kraft (49) übertragenden Stößels (41, 42, 43, 44) begrenzt ist.

11. Kraftmesseinrichtung nach Anspruch 10, **dadurch gekennzeichnet, dass** die Hülse (30) im Bereich der Stößel (41, 42, 43, 44) von einer Lagerschale (18) umschlossen ist und dass der Kraftfluss von der Lagerschale (18) über min-destens einen der Stößel (41, 42, 43, 44) und den Messstab (32, 62) in die Hülse (30) verläuft.

12. Kraftmesseinrichtung nach Anspruch 11, **dadurch gekennzeichnet, dass** die Lagerschale (18) als Kugelbuchse ausgebildet ist.

13. Kraftmesseinrichtung nach einem der Ansprüche 4 bis 12, **dadurch gekennzeichnet, dass** der Querschnitt des Messstabs (32, 62) in dem Bereich (35; 66), in dem ein Stößel (43) an dem Messstab (32, 62) angreift, rechteckförmig ausgebildet ist.

14. Kraftmesseinrichtung nach Anspruch 13, **dadurch gekennzeichnet, dass** der rechteckförmigen Querschnitt unterschiedliche Kantenlängen aufweist.
